# EUROPEAN PATENT APPLICATION

(11) **EP 4 686 067 A1**
(43) Date of publication of application: **28.01.2026**
(21) Application number: 24773763.8
(22) Date of filing: 09.01.2024
(51) Int. Cl.: H02M 1/36, H02M 3/06, G09G 3/20

(54) **POWER MANAGEMENT CIRCUIT AND POWER MANAGEMENT CHIP**

(30) Priority: 21.03.2023 CN 202310283284
(71) Applicant: Huizhou Vision New Technology Co., Ltd., Huizhou, Guangdong 516000 (CN)
(72) Inventor: TANG, Wang, Guangdong 516000 (CN); ZHANG, Yue, Guangdong 516000 (CN)
(74) Representative: Murgitroyd & Company
(86) International application number: PCT/CN2024/071288
(87) International publication number: WO 2024/193193

(57) **Abstract**

The present application discloses a power management circuit and a power management chip. The power management circuit comprises : a main control module which comprises an enabling control end, wherein the main control module receives an on/off control signal by means of the enabling control end, and the on/off control signal is used for controlling the main control module to be turned on or turned off; a first buck module connected to a first buck output end of the main control module and used for outputting a first buck voltage after the main control module is turned on; and a second buck module connected to a second buck output end of the main control module and used for outputting a second buck voltage after the main control module is started.

## Description

This application claims priority to Chinese Patent Application No. 202310283284.9, titled "POWER MANAGEMENT CIRCUIT AND POWER MANAGEMENT CHIP", filed with the China National Intellectual Property Administration on March 21, 2023, the entire content of which is incorporated herein by reference.

### TECHNICAL FIELD

This application relates to the technical field of electronic circuits, and particularly to a power management circuit and a power management chip.

### BACKGROUND

Power management integrated chips are primarily used for supplying power to display panels, providing gamma voltages, common voltages, and the like for the display panel.

### TECHNICAL PROBLEM

Current power management integrated chips are equipped with multiple buck circuits, requiring the corresponding setup of multiple ports. Additionally, the on/off switching state control of the power management integrated chips involves the setup of on/off switching circuits, resulting in a complex peripheral circuit structure for the power management integrated chips.

### SUMMARY OF INVENTION

The objective of this application is to provide a power management circuit and a power management chip that can effectively simplify the peripheral circuit structure of the chip.

To achieve the above objective, this application adopts the following technical solution:

The embodiments of this application provide a power management circuit, including: a main control module, including an enabling control terminal, wherein the main control module receives an on/off switch control signal through the enabling control terminal, and the on/off switch control signal is used to control the main control module to turn on or off; a first buck module, connected to a first buck output terminal of the main control module, and configured to output a first buck voltage after the main control module is turned on; and a second buck module, connected to a second buck output terminal of the main control module, and configured to output a second buck voltage after the main control module is turned on.

In some embodiments of the power management circuit, the main control module further includes at least one gamma voltage output terminal, configured to output display driving voltage; each gamma voltage output terminal is connected in series with a first resistor, and each first resistor is integrated into the main control module.

In some embodiments of the power management circuit, the main control module further includes a clock signal output terminal and a discharge output terminal, the clock signal output terminal is configured to output a corresponding clock signal, and the discharge output terminal is configured to output a corresponding LS signal.

In some embodiments of the power management circuit, the power management circuit further includes a gamma voltage output module, connected to each gamma voltage output terminal, and configured to filter the display driving voltage.

In some embodiments of the power management circuit, the power management circuit further includes at least one common voltage output module, wherein each common voltage output module is connected to a corresponding common voltage output terminal of the main control module, and is configured to filter the common voltage output from the corresponding common voltage output terminal.

In some embodiments of the power management circuit, the power management circuit further includes a first boost module, a second boost module, and a buck-boost module; the first boost module is connected to a first negative voltage output terminal of the main control module, and configured to output operating voltage after the main control module is turned on; the second boost module is connected to a second negative voltage output terminal of the main control module, and configured to output turn-on voltage after the main control module is turned on; the buck-boost module is connected to a third negative voltage output terminal of the main control module, and configured to output turn-off voltage after the main control module is turned on.

In some embodiments of the power management circuit, the first buck module includes a first inductor, a second resistor, a first capacitor, a second capacitor, a third capacitor, a fourth capacitor, a fifth capacitor, a third resistor, and a fourth resistor; one end of the first inductor and one end of the second resistor are connected to the first buck output terminal of the main control module, the other end of the second resistor is grounded through the first capacitor, the other end of the first inductor is connected to the first buck voltage output terminal through the fourth resistor, one end of the second capacitor, one end of the third capacitor, one end of the fourth capacitor, one end of the fifth capacitor, and one end of the third resistor are connected to the other end of the first inductor, and the other end of the second capacitor, the other end of the third capacitor, the other end of the fourth capacitor, the other end of the fifth capacitor, and the other end of the third resistor are grounded.

In some embodiments of the power management circuit, the second buck module includes a second inductor, a fifth resistor, a sixth capacitor, a seventh capacitor, an eighth capacitor, a ninth capacitor, a tenth capacitor, a sixth resistor, and a seventh resistor; one end of the second inductor and one end of the fifth resistor are connected to the first buck output terminal of the main control module, the other end of the fifth resistor is grounded through the sixth capacitor, the other end of the second inductor is connected to the second buck voltage output terminal through the seventh resistor, one end of the seventh capacitor, one end of the eighth capacitor, one end of the ninth capacitor, and one end of the tenth capacitor are connected to the other end of the second inductor, and the other end of the seventh capacitor, the other end of the eighth capacitor, the other end of the ninth capacitor, and the other end of the tenth capacitor are grounded.

In some embodiments of the power management circuit, the gamma voltage output module includes one or more filtering capacitors, the number of which is equal to that of the at least one gamma voltage output terminal, and each of the one or more filtering capacitors is connected in parallel with a corresponding one of the at least one gamma voltage output terminal.

In some embodiments of the power management circuit, each common voltage output modules includes an eighth resistor, a ninth resistor, an eleventh capacitor, a twelfth capacitor, and a thirteenth capacitor; one end of the eighth resistor is connected to the corresponding common voltage output terminal of the main control module, the other end of the eighth resistor and one end of the ninth resistor are connected to a voltage output terminal, one end of the eleventh capacitor, one end of the twelfth capacitor, and one end of the thirteenth capacitor are connected to the other end of the eighth resistor, and the other end of the eleventh capacitor, the other end of the twelfth capacitor, and the other end of the thirteenth capacitor are grounded.

This application further provides a power management chip, which includes a power management circuit. The power management circuit includes a main control module, a first buck module, and a second buck module. The main control module includes an enabling control terminal, wherein the main control module receives an on/off switch control signal through the enabling control terminal, and the on/off switch control signal is used to control the main control module to turn on or off. The first buck module is connected to a first buck output terminal of the main control module, and is configured to output a first buck voltage after the main control module is turned on. The second buck module is connected to a second buck output terminal of the main control module, and is configured to output a second buck voltage after the main control module is turned on.

In some embodiments of the power management chip, the main control module further includes at least one gamma voltage output terminal, configured to output display driving voltage; each gamma voltage output terminal is connected in series with a first resistor, and each first resistor is integrated into the main control module.

In some embodiments of the power management chip, the main control module further includes a clock signal output terminal and a discharge output terminal, the clock signal output terminal is configured to output a corresponding clock signal, and the discharge output terminal is configured to output a corresponding LS signal.

In some embodiments of the power management chip, the power management circuit further includes a gamma voltage output module, connected to each gamma voltage output terminal, and configured to filter the display driving voltage.

In some embodiments of the power management chip, the power management circuit further includes at least one common voltage output module, wherein each common voltage output module is connected to a corresponding common voltage output terminal of the main control module, and is configured to filter the common voltage output from the corresponding common voltage output terminal.

In some embodiments of the power management chip, the power management circuit further includes a first boost module, a second boost module, and a buck-boost module; the first boost module is connected to a first negative voltage output terminal of the main control module and is configured to output operating voltage after the main control module is turned on; the second boost module is connected to a second negative voltage output terminal of the main control module and is configured to output turn-on voltage after the main control module is turned on; the buck-boost module is connected to a third negative voltage output terminal of the main control module and is configured to output turn-off voltage after the main control module is turned on.

In some embodiments of the power management chip, the first buck module includes a first inductor, a second resistor, a first capacitor, a second capacitor, a third capacitor, a fourth capacitor, a fifth capacitor, a third resistor, and a fourth resistor; one end of the first inductor and one end of the second resistor are connected to the first buck output terminal of the main control module, the other end of the second resistor is grounded through the first capacitor, the other end of the first inductor is connected to the first buck voltage output terminal through the fourth resistor, one end of the second capacitor, one end of the third capacitor, one end of the fourth capacitor, one end of the fifth capacitor, and one end of the third resistor are connected to the other end of the first inductor, and the other end of the second capacitor, the other end of the third capacitor, the other end of the fourth capacitor, the other end of the fifth capacitor, and the other end of the third resistor are grounded.

In some embodiments of the power management chip, the second buck module includes a second inductor, a fifth resistor, a sixth capacitor, a seventh capacitor, an eighth capacitor, a ninth capacitor, a tenth capacitor, a sixth resistor, and a seventh resistor; one end of the second inductor and one end of the fifth resistor are connected to the first buck output terminal of the main control module, the other end of the fifth resistor is grounded through the sixth capacitor, the other end of the second inductor is connected to the second buck voltage output terminal through the seventh resistor, one end of the seventh capacitor, one end of the eighth capacitor, one end of the ninth capacitor, and one end of the tenth capacitor are connected to the other end of the second inductor, and the other end of the seventh capacitor, the other end of the eighth capacitor, the other end of the ninth capacitor, and the other end of the tenth capacitor are grounded.

In some embodiments of the power management chip, the gamma voltage output module includes one or more filtering capacitors, the number of which is equal to that of the at least one gamma voltage output terminal, wherein each of the one or more filtering capacitors is connected in parallel with a corresponding one of the at least one gamma voltage output terminal.

In some embodiments of the power management chip, each common voltage output modules includes an eighth resistor, a ninth resistor, an eleventh capacitor, a twelfth capacitor, and a thirteenth capacitor; one end of the eighth resistor is connected to the corresponding common voltage output terminal of the main control module, the other end of the eighth resistor and one end of the ninth resistor are connected to a voltage output terminal, one end of the eleventh capacitor, one end of the twelfth capacitor, and one end of the thirteenth capacitor are connected to the other end of the eighth resistor, and the other end of the eleventh capacitor, the other end of the twelfth capacitor, and the other end of the thirteenth capacitor are grounded.

### BENEFICIAL EFFECTS

The power management circuit provided in this application is equipped with an enabling control terminal that receives an on/off switch control signal to turn the power management circuit on or off, thereby eliminating the need for a separate on/off switch power supply. Meanwhile, the power management circuit in this application is designed with only two buck voltages, requiring only two buck output terminals, which reduces the configuration of the buck module and further simplifies the peripheral circuit structure of the chip.

### BRIEF DESCRIPTION OF THE DRAWINGS

To clearly illustrate the technical solutions in the embodiments of this application, the drawings required for the description of the embodiments will be briefly introduced below. It is evident that the drawings described below are merely some embodiments of this application. For those skilled in the art, other drawings can also be derived based on these drawings without creative effort.
Figure 1 is a block diagram of a first structure of the power management chip provided in this application.
Figure 2 is a block diagram of a second structure of the power management chip provided in this application.
Figure 3 is a block diagram of a third structure of the power management chip provided in this application.
Figure 4 is a block diagram of a fourth structure of the power management chip provided in this application.
Figure 5 is a schematic diagram of pins of the main control module in the power management chip provided in this application.
Figure 6 is a circuit diagram of a first buck module in the power management chip provided in this application.
Figure 7 is a circuit diagram of a second buck module in the power management chip provided in this application.
Figure 8 is a circuit diagram of the gamma voltage output module in the power management chip provided in this application.
Figure 9 is a circuit diagram of the common voltage output module in the power management chip provided in this application.
Figure 10 is a circuit diagram of the buck-boost module in the power management chip provided in this application.
Figure 11 is a circuit diagram of a first boost module in the power management chip provided in this application.
Figure 12 is a circuit diagram of a second boost module in the power management chip provided by this application.

### DETAILED DESCRIPTION OF THE EMBODIMENTS

The purpose of this application is to provide an antenna assembly and terminal equipment, wherein the antenna assembly improves the isolation between antenna structures by setting an isolation zone in the antenna structure, thereby ensuring the overall performance of the antenna assembly.

To make the objectives, technical solutions, and effects of this application clearer and more explicit, the following provides a detailed description of this application with reference to the accompanying drawings and embodiments. It should be understood that the specific embodiments described herein are only for explaining this application and are not intended to limit it.

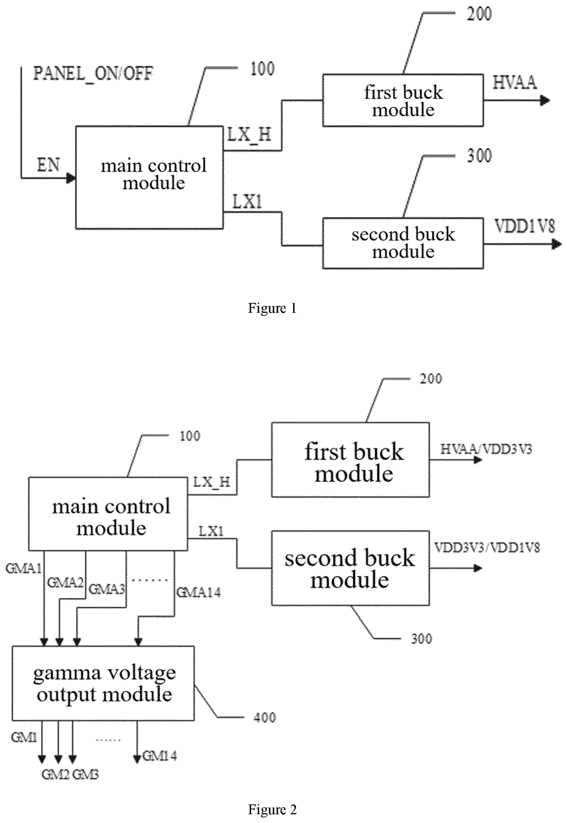

Referring to Figure 1, this application provides a power management chip including a power management circuit, wherein the power management circuit includes: a main control module 100, the main control module 100 includes an enabling control terminal, the main control module 100 receives an on/off switch control signal via the enabling control terminal (EN terminal in this embodiment), the on/off switch control signal is used to control the main control module 100 to turn on or off; a first buck module 200, which is connected to the first buck output terminal (X_H terminal in this embodiment) of the main control module 100 and is used to output the first buck voltage after the main control module 100 is turned on; a second buck module 300, which is connected to the second buck output terminal (LX1 terminal in this embodiment) of the main control module 100 and is used to output the second buck voltage after the main control module 100 is turned on. In this embodiment, the on/off switch control signal is PANEL_ON/OFF. The main control module serves as the core part of the power management chip, while the first buck module and the second buck module are peripheral circuits of the chip. The power management circuit in this application achieves control of turning the power management circuit on or off by setting an enabling control terminal to receive the on/off switch control signal, which controls the main control module to turn on or off. This eliminates the need for a separate on/off switch power supply. Furthermore, the power management circuit in this application is equipped with only two buck voltages, requiring only two buck output terminals, thereby reducing the configuration of buck modules and simplifying the peripheral circuit structure of the chip.

In some embodiments, the main control module 100 in this application also includes at least one gamma voltage output terminal for outputting display driving voltage. Each gamma voltage output terminal is connected in series with a first resistor, and each first resistor is integrated into the main control module 100. Specifically, in this embodiment, the main control module 100 includes 14 gamma voltage output terminals, with each pin corresponding to a first resistor connected in series. The first resistor acts as a voltage divider resistor. After passing through this voltage divider resistor, the display driving voltages output through the gamma voltage output terminals are labeled GMA1, GMA2, GMA3, ..., GMA14. In this application, by integrating the first resistors into the main control module 100, the peripheral circuit structure of the main control module 100 can be effectively reduced, thereby simplifying the structure of the power management circuit.

Referring to Figure 2, in some embodiments, the power management circuit in this application further includes a gamma voltage output module 400. The gamma voltage output module 400 is connected to each gamma voltage output terminal and is used to filter the display driving voltages. In this embodiment, there are 14 gamma voltage output terminals, and correspondingly, 14 display driving voltages are output after being filtered by the gamma voltage output module 400. The filtered display driving voltages are GM1, GM2, GM3, ..., GM14. By setting the gamma voltage output module 400 to filter the display driving voltages, this application can effectively ensure the stability and reliability of the display driving voltages.

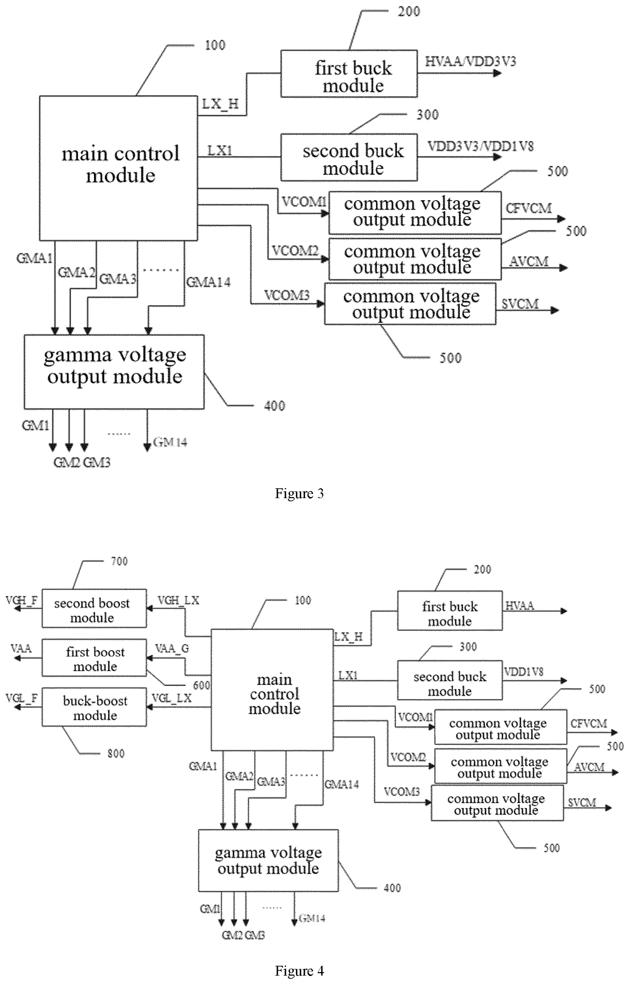

Referring to Figure 3, in some embodiments, the power management circuit further includes: at least one common voltage output module 500. Each common voltage output module 500 is connected to the corresponding common voltage output terminal of the main control module 100 and is used to filter the common voltages output by the respective common voltage output terminals. Specifically, in the embodiment of this application, the main control module 100 is equipped with three common voltage output terminals. The common voltages output by the three common voltage output terminals are VCM1, VCM2, and VCM3. After the common voltage output module 500 filters the three common voltages, the common voltages CFVCM, SVCM, and AVCM are generated.

Referring to Figure 4, in some embodiments, the power management circuit further includes: a first boost module 600, which is connected to the first negative voltage output terminal of the main control module 100 and is used to output the operating voltage after the main control module 100 is turned on; a second boost module 700, which is connected to the second negative voltage output terminal of the main control module 100 and is used to output the turn-on voltage after the main control module 100 is turned on; and a buck-boost module 800, which is connected to the third negative voltage output terminal of the main control module 100 and is used to output the turn-off voltage after the main control module 100 is turned on. Among these, the turn-on voltage is VGH_F, the operating voltage is VAA, and the turn-off voltage is VGL_F. In this application, the main control module 100 is equipped with three power conversion modules. After the main control module 100 is turned on, the first negative voltage output terminal, second negative voltage output terminal, and third negative voltage output terminal of the main control module 100 respectively output three negative voltages-VAA_G terminal, VGH_LX terminal, and VGL_LX terminal-to provide the required voltages for the display panel.

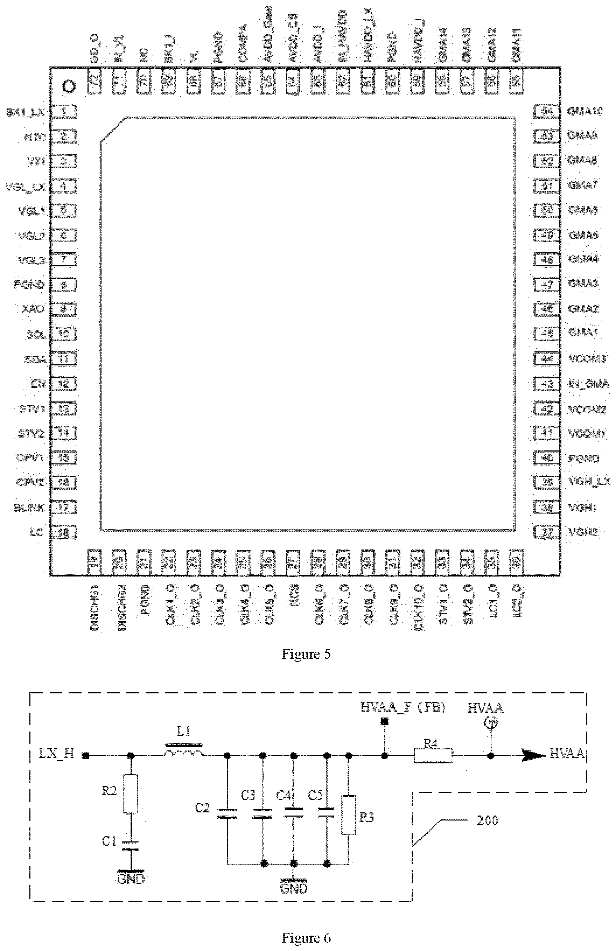

Referring to Figure 5, in some embodiments, the main control module 100 in this application further includes ten clock signal output terminals and two discharge output terminals. Among them, the ten clock signal output terminals correspond to pins 22 to 26 and pins 28 to 32, respectively, while the two discharge output terminals correspond to pins 35 and 36, respectively. The ten clock signal output terminals are used to output corresponding clock signals, i.e., CK signals, and the discharge output terminals are used to output corresponding LS signals. The power management circuit in this application is used to provide various required electrical energy, as well as CK signals and LS signals, to the display terminal. The LS signals may be used to control the pixel circuits in the display to release charges. The number of required CK and LS signal channels varies depending on the model of the display. For example, some displays require one LS signal channel, while others require two. This application provides two LS signal output channels and ten CK signal output channels to ensure compatibility with different display models, thereby achieving effective matching with various display models and improving the compatibility of the power management circuit.

Referring to Figure 6, as an embodiment, the first buck module 200 includes a first inductor L1, a second resistor R2, a first capacitor C1, a second capacitor C2, a third capacitor C3, a fourth capacitor C4, a fifth capacitor C5, a third resistor R3, and a fourth resistor R4. One end of the first inductor L1 and one end of the second resistor R2 are both connected to the first buck output terminal of the main control module 100. The other end of the second resistor R2 is grounded through the first capacitor C1. The other end of the first inductor L1 is connected to the first buck voltage output terminal through the fourth resistor R4. One end of the second capacitor C2, one end of the third capacitor C3, one end of the fourth capacitor C4, one end of the fifth capacitor C5, and one end of the third resistor R3 are all connected to the other end of the first inductor L1. The other end of the second capacitor C2, the other end of the third capacitor C3, the other end of the fourth capacitor C4, the other end of the fifth capacitor C5, and the other end of the third resistor R3 are all grounded. The enabling control terminal of the main control module 100 corresponds to pin 12, and the enabling pin receives the on/off switch control signal PANEL_ON/OFF. The first buck voltage output terminal of the main control module 100 corresponds to pin 61. The first buck voltage output by the first buck module 200 in this embodiment is HVAA or VDD3V3.

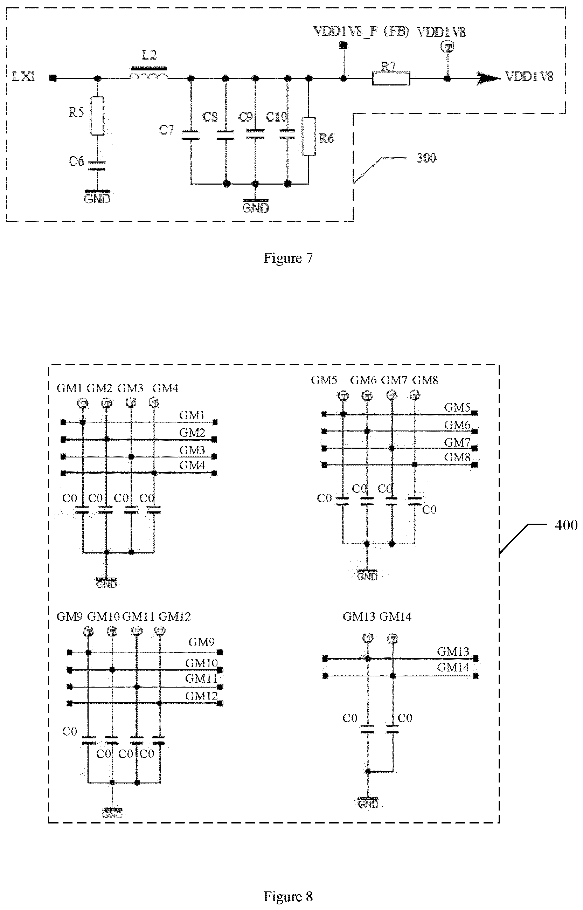

Referring to Figure 7, as an embodiment, the second buck module 300 includes a second inductor L2, a fifth resistor R5, a sixth capacitor C6, a seventh capacitor C7, an eighth capacitor C8, a ninth capacitor C9, a tenth capacitor C10, a sixth resistor R6, and a seventh resistor R7. One end of the second inductor L2 and one end of the fifth resistor R5 are both connected to the first buck output terminal of the main control module 100. The other end of the fifth resistor R5 is grounded through the sixth capacitor C6. The other end of the second inductor L2 is connected to the second buck voltage output terminal through the seventh resistor R7. One end of the seventh capacitor C7, one end of the eighth capacitor C8, one end of the ninth capacitor C9, one end of the tenth capacitor C10, and one end of the sixth resistor R6 are all connected to the other end of the second inductor L2. The other end of the seventh capacitor C7, the other end of the eighth capacitor C8, the other end of the ninth capacitor C9, the other end of the tenth capacitor C10, and the other end of the sixth resistor R6 are all grounded. In this embodiment, the second buck output terminal of the main control module 100 corresponds to pin 69, and the first buck voltage is VDD3V3 or VDD1V8.

In this application, by setting only two buck modules, one of which is used to output voltage HVAA or VDD3V3, and the other is used to output voltage VDD3V3 or VDD1V8, the number of buck modules is reduced, and the usage of the corresponding ports of the main control module 100 is also decreased. This effectively reduces the peripheral circuit structure of the main control module 100 and simplifies the structure of the power management circuit.

Referring to Figure 8, as an embodiment, the gamma voltage output module 400 includes one or more filtering capacitors, the number of which is equal to that of the at least one gamma voltage output terminal, and each of the one or more filtering capacitors is connected in parallel with a corresponding one of the at least one gamma voltage output terminal. In this embodiment, 14 gamma voltage output terminals are provided, and correspondingly, 14 filter capacitors are set. Each gamma voltage output terminal is connected in parallel with a filter capacitor. The filter capacitor can filter the display driving voltage output from the gamma voltage output terminal of the main control module 100. The filtered display driving voltage corresponds to GM1, GM2, GM3, ... GM14. In this application, by setting a filter capacitor at each gamma voltage output terminal, the stability and reliability of the display driving voltage can be ensured.

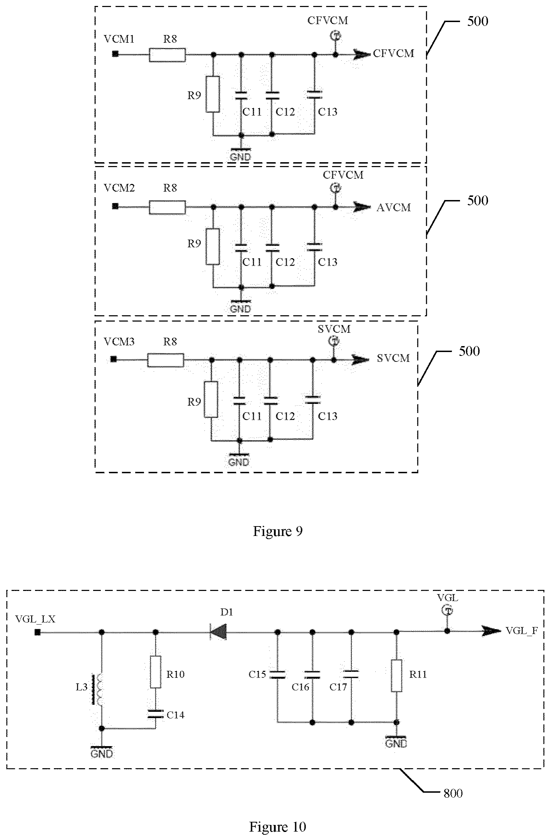

Referring to Figure 9, as an embodiment, each common voltage output module 500 includes an eighth resistor R8, a ninth resistor R9, an eleventh capacitor C11, a twelfth capacitor C12, and a thirteenth capacitor C13. One end of the eighth resistor R8 is connected to the corresponding common voltage output terminal of the main control module 100. The other end of the eighth resistor R8 and one end of the ninth resistor R9 are both connected to the voltage output terminal. One end of the eleventh capacitor C11, one end of the twelfth capacitor C12, and one end of the thirteenth capacitor C13 are all connected to the other end of the eighth resistor R8. The other end of the eleventh capacitor C11, the other end of the twelfth capacitor C12, and the other end of the thirteenth capacitor C13 are all grounded. In this embodiment, three common voltage output modules 500 are provided. The three common voltage output modules 500 output three common voltages, namely CFVCM, SVCM, and AVCM, respectively. Among them, the three common output modules are respectively connected to pin 41, pin 42, and pin 44 of the main control module 100. In this application, the three common voltages are output through the three common voltage output modules 500 of the main control module 100, providing a common level state for the display panel.

Referring to Figure 10, as an embodiment, the buck-boost module 800 includes a third inductor L3, a tenth resistor R10, a fourteenth capacitor C14, a fifteenth capacitor C15, a sixteenth capacitor C16, a seventeenth capacitor C17, an eleventh resistor R11, and a first diode D1. One end of the third inductor L3 and one end of the tenth resistor R10 are both connected to the cathode of the first diode D1. The cathode of the first diode D1 is connected to the third negative voltage output terminal of the main control module 100 (in this embodiment, the VGL_LX terminal, i.e., pin 4 of the main control module 100). The other end of the third inductor L3 is grounded. The anode of the first diode D1 is connected to the voltage output terminal. One end of the fifteenth capacitor C15, one end of the sixteenth capacitor C16, one end of the seventeenth capacitor C17, and one end of the eleventh resistor R11 are all connected to the anode of the first diode D1. The other end of the fifteenth capacitor C15, the other end of the sixteenth capacitor C16, the other end of the seventeenth capacitor C17, and the other end of the eleventh resistor R11 are all grounded. In this embodiment, the first negative voltage output terminal corresponds to pin 65 of the main control module 100, the second negative voltage output terminal corresponds to pin 39 of the main control module 100, and the third negative voltage output terminal corresponds to pin 4 of the main control module 100.

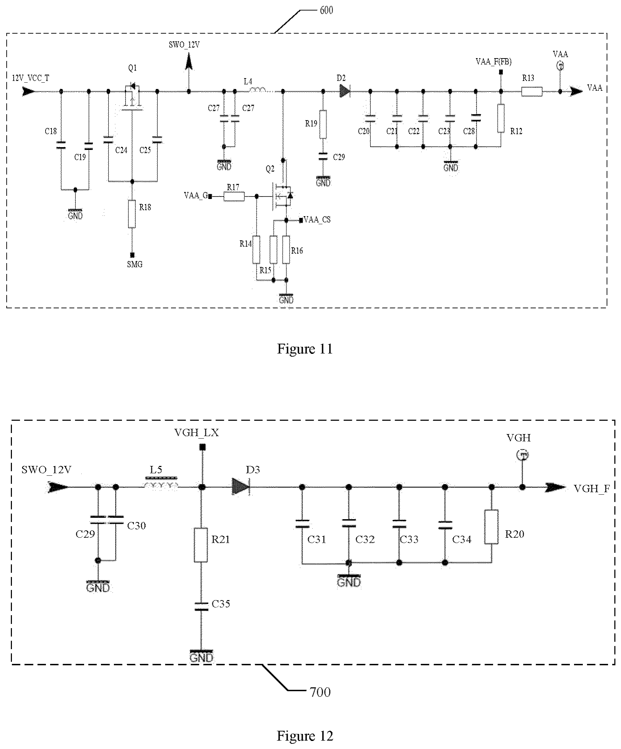

Referring to Figure 11, as an embodiment, the first boost module 600 includes a fourth inductor L4, an eighteenth capacitor C18, a nineteenth capacitor C19, a twentieth capacitor C20, a twenty-first capacitor C21, a twenty-second capacitor C22, a twenty-third capacitor C23, a twenty-fourth capacitor C24, a twenty-fifth capacitor C25, a twenty-sixth capacitor C26, a twenty-seventh capacitor C27, a twenty-eighth capacitor C28, a twenty-ninth capacitor C29, a twelfth resistor R12, a thirteenth resistor R13, a fourteenth resistor R14, a fifteenth resistor R15, a sixteenth resistor R16, a seventeenth resistor R17, an eighteenth resistor R18, a nineteenth resistor R19, a first switch Q1, a second switch Q2, and a second diode D2. One end of the eighteenth capacitor C18, one end of the nineteenth capacitor C19, one end of the twenty-fourth capacitor C24, and the source of the first switch Q1 are all connected to the power supply. The other end of the eighteenth capacitor C18 and the other end of the nineteenth capacitor C19 are grounded. The gate of the first switch Q1 is connected to pin 12 of the main control module 100 through the eighteenth resistor R18. The other end of the twenty-fourth capacitor C24 and one end of the twenty-fifth capacitor C25 are both connected to the gate of the first switch Q1. The other end of the second capacitor C25 is connected to the drain of the first switch Q1. The drain of the first switch Q1 is connected to one end of the fourth inductor L4. One end of the twenty-sixth capacitor C26 and the twenty-seventh capacitor C27 are both connected to one end of the fourth inductor L4. The other end of the twenty-sixth capacitor C26 and the other end of the twenty-seventh capacitor C27 are both grounded. The other end of the fourth inductor L4, the source of the second switch Q2, and one end of the nineteenth resistor R19 are all connected to the anode of the second diode D2. The other end of the nineteenth resistor R19 is grounded through the twenty-ninth capacitor C29. The gate of the second switch Q2 is connected to the first negative voltage output terminal (in this embodiment, the VAA_G terminal, which corresponds to pin 65 of the main control module 100) of the main control module 100through the seventeenth resistor R17. The drain of the second switch Q2 is connected to one end of the fifteenth resistor R15 and one end of the sixteenth resistor R16. The other end of the fifteenth resistor R15, the other end of the sixteenth resistor R16, and one end of the fourteenth resistor R14 are all grounded. The other end of the fourteenth resistor R14 is connected to the gate of the second switch Q2. The cathode of the second diode D2 is connected to the voltage output terminal (in this embodiment, the VAA terminal) through the thirteenth resistor R13. One end of the twentieth capacitor C20, one end of the twenty-first capacitor C21, one end of the twenty-second capacitor C22, one end of the twenty-third capacitor C23, one end of the twenty-eighth capacitor C28, and one end of the twelfth resistor R12 are all connected to the cathode of the second diode D2. The other end of the twentieth capacitor C20, the other end of the twenty-first capacitor C21, the other end of the twenty-second capacitor C22, the other end of the twenty-third capacitor C23, the other end of the twenty-eighth capacitor C28, and the other end of the twelfth resistor R12 are all grounded.

Referring to Figure 12, as an embodiment, the second boost module 700 includes the twenty-ninth capacitor C29, the thirtieth capacitor C30, the fifth inductor L5, the twenty-first resistor R21, the thirty-first capacitor C31, the thirty-second capacitor C32, the thirty-third capacitor C33, the thirty-fourth capacitor C34, the thirty-fifth capacitor C35, and the third diode D3. One end of the twenty-ninth capacitor C29, one end of the thirtieth capacitor C30, and one end of the fifth inductor L5 are all connected to power. The other end of the fifth inductor L5 and one end of the twenty-first resistor R21 are both connected to the anode of the third diode D3. The other end of the twenty-first resistor R21 is grounded through the thirty-fifth capacitor C35. The cathode of the third diode D3 is connected to the turn-on voltage output terminal (in this embodiment, the VGH_F voltage output terminal). The anode of the third diode D3 is also connected to the second negative voltage output terminal (in this embodiment, the VGH_LX terminal, which corresponds to pin 39 of the main control module 100). One end of the third capacitor C31, one end of the thirty-second capacitor C32, one end of the thirty-third capacitor C33, one end of the thirty-fourth capacitor C34, and one end of the twentieth resistor R20 are all connected to the cathode of the third diode D3. The other end of the third capacitor C31, the other end of the thirty-second capacitor C32, the other end of the thirty-third capacitor C33, the other end of the thirty-fourth capacitor C34, and the other end of the twentieth resistor R20 are all grounded. In this application, the main control module 100 is equipped with three power conversion modules, namely the buck-boost module 800, the first boost module 600, and the second boost module 700. After the main control module 100 is turned on, the first negative voltage output terminal, the second negative voltage output terminal, and the third negative voltage output terminal of the main control module 100 output three negative voltages for the VAA_G terminal, the VGH_LX terminal, and the VGL_LX terminal, respectively. These voltages are converted through the first boost module 600, the second boost module 700, and the buck-boost module 800 to obtain the operating voltage VAA, the turn-on voltage VGH_F, and the turn-off voltage VGL_F.

Furthermore, this application also provides a corresponding power management circuit. Since the power management circuit has been described in detail above, it will not be repeated here.

In summary, this application provides a power management circuit and a power management chip. The power management circuit includes: a main control module with an enabling control terminal. The main control module receives an on/off switch control signal through the enabling control terminal, and the on/off switch control signal is used to control the main control module to turn on or off; a first buck module that is connected to the first buck output terminal of the main control module, which outputs the first buck voltage after the main control module is turned on; and a second buck module that is connected to the second buck output terminal of the main control module, which outputs the second buck voltage after the main control module is turned on. This application effectively simplifies the peripheral circuit structure of the main control module, thereby simplifying the structure of the power management chip.

It is understood that for those skilled in the art, equivalent replacements or modifications can be made based on the technical solutions and concepts of this application, and all such changes or replacements should fall within the scope of protection of the claims attached to this application.

## Claims

1. A power management circuit, comprising:
a main control module, including an enabling control terminal, wherein the main control module is configured to receive an on/off switch control signal through the enabling control terminal, and the on/off switch control signal is used to control the main control module to turn on or off;
a first buck module, connected to a first buck output terminal of the main control module, and configured to output a first buck voltage after the main control module is turned on; and
a second buck module, connected to a second buck output terminal of the main control module, and configured to output a second buck voltage after the main control module is turned on.

2. The power management circuit according to claim 1, wherein the main control module further comprises:
at least one gamma voltage output terminal, configured to output display driving voltage;
wherein each of the at least one gamma voltage output terminal is connected in series with a first resistor, and the first resistor is integrated in the main control module.

3. The power management circuit according to claim 2, wherein the main control module further comprises a clock signal output terminal and a discharge output terminal, the clock signal output terminal is configured to output a corresponding clock signal, and the discharge output terminal is configured to output a corresponding LS signal.

4. The power management circuit according to claim 2, further comprising:
a gamma voltage output module, connected to each of the at least one gamma voltage output terminal, and configured to filter the display driving voltage.

5. The power management circuit according to claim 4, further comprising:
at least one common voltage output module, wherein each of the at least one common voltage output module is connected to a corresponding common voltage output terminal of the main control module, and is configured to filter common voltage output from the corresponding common voltage output terminal.

6. The power management circuit according to claim 5, further comprising:
a first boost module, connected to a first negative voltage output terminal of the main control module, and configured to output operating voltage after the main control module is turned on;
a second boost module, connected to a second negative voltage output terminal of the main control module, and configured to output turn-on voltage after the main control module is turned on;
a buck-boost module, connected to a third negative voltage output terminal of the main control module, and configured to output turn-off voltage after the main control module is turned on.

7. The power management circuit according to claim 1, wherein the first buck module comprises a first inductor, a second resistor, a first capacitor, a second capacitor, a third capacitor, a fourth capacitor, a fifth capacitor, a third resistor, and a fourth resistor;
one end of the first inductor and one end of the second resistor are connected to the first buck output terminal of the main control module, the other end of the second resistor is grounded through the first capacitor, the other end of the first inductor is connected to the first buck voltage output terminal through the fourth resistor;
one end of the second capacitor, one end of the third capacitor, one end of the fourth capacitor, one end of the fifth capacitor, and one end of the third resistor are connected to the other end of the first inductor; and
the other end of the second capacitor, the other end of the third capacitor, the other end of the fourth capacitor, the other end of the fifth capacitor, and the other end of the third resistor are grounded.

8. The power management circuit according to claim 1, wherein the second buck module comprises a second inductor, a fifth resistor, a sixth capacitor, a seventh capacitor, an eighth capacitor, a ninth capacitor, a tenth capacitor, a sixth resistor, and a seventh resistor;
one end of the second inductor and one end of the fifth resistor are connected to the first buck output terminal of the main control module, the other end of the fifth resistor is grounded through the sixth capacitor, the other end of the second inductor is connected to the second buck voltage output terminal through the seventh resistor;
one end of the seventh capacitor, one end of the eighth capacitor, one end of the ninth capacitor, and one end of the tenth capacitor are connected to the other end of the second inductor, and the other end of the seventh capacitor, the other end of the eighth capacitor, the other end of the ninth capacitor, and the other end of the tenth capacitor are grounded.

9. The power management circuit according to claim 4, wherein the gamma voltage output module comprises one or more filtering capacitors, the number of which is equal to that of the at least one gamma voltage output terminal, wherein each of the one or more filtering capacitors is connected in parallel with a corresponding one of the at least one gamma voltage output terminal.

10. The power management circuit according to claim 5, wherein each of the at least one common voltage output module comprises an eighth resistor, a ninth resistor, an eleventh capacitor, a twelfth capacitor, and a thirteenth capacitor;
one end of the eighth resistor is connected to the corresponding common voltage output terminal of the main control module, the other end of the eighth resistor and one end of the ninth resistor are connected to a voltage output terminal;
one end of the eleventh capacitor, one end of the twelfth capacitor, and one end of the thirteenth capacitor are connected to the other end of the eighth resistor, and the other end of the eleventh capacitor, the other end of the twelfth capacitor, and the other end of the thirteenth capacitor are grounded.

11. A power management chip, comprising a power management circuit, wherein the power management circuit comprises:
a main control module, including an enabling control terminal, wherein the main control module is configured to receive an on/off switch control signal through the enabling control terminal, and the on/off switch control signal is used to control the main control module to turn on or off;
a first buck module, connected to a first buck output terminal of the main control module, and configured to output a first buck voltage after the main control module is turned on; and
a second buck module, connected to a second buck output terminal of the main control module, and configured to output a second buck voltage after the main control module is turned on.

12. The power management chip according to claim 11, wherein the main control module further comprises:
at least one gamma voltage output terminal, configured to output display driving voltage;
wherein each of the at least one gamma voltage output terminal is connected in series with a first resistor, and each first resistor is integrated in the main control module.

13. The power management chip according to claim 11, wherein the main control module further comprises a clock signal output terminal and a discharge output terminal, the clock signal output terminal is configured to output a corresponding clock signal, and the discharge output terminal is configured to output a corresponding LS signal.

14. The power management chip according to claim 12, wherein the power management circuit further comprises:
a gamma voltage output module, connected to each of the at least one gamma voltage output terminal, and configured to filter the display driving voltage.

15. The power management chip according to claim 14, wherein the power management circuit further comprises:
at least one common voltage output module, wherein each of the at least one common voltage output module is connected to a corresponding common voltage output terminal of the main control module, and is configured to filter common voltage output from the corresponding common voltage output terminal.

16. The power management chip according to claim 15, wherein the power management circuit further comprises:
a first boost module, connected to a first negative voltage output terminal of the main control module, and configured to output operating voltage after the main control module is turned on;
a second boost module, connected to a second negative voltage output terminal of the main control module, and configured to output turn-on voltage after the main control module is turned on;
a buck-boost module, connected to a third negative voltage output terminal of the main control module, and configured to output turn-off voltage after the main control module is turned on.

17. The power management chip according to claim 11, wherein the first buck module comprises a first inductor, a second resistor, a first capacitor, a second capacitor, a third capacitor, a fourth capacitor, a fifth capacitor, a third resistor, and a fourth resistor;
one end of the first inductor and one end of the second resistor are connected to the first buck output terminal of the main control module, the other end of the second resistor is grounded through the first capacitor, the other end of the first inductor is connected to the first buck voltage output terminal through the fourth resistor;
one end of the second capacitor, one end of the third capacitor, one end of the fourth capacitor, one end of the fifth capacitor, and one end of the third resistor are connected to the other end of the first inductor; and
the other end of the second capacitor, the other end of the third capacitor, the other end of the fourth capacitor, the other end of the fifth capacitor, and the other end of the third resistor are grounded.

18. The power management chip according to claim 11, wherein the second buck module comprises a second inductor, a fifth resistor, a sixth capacitor, a seventh capacitor, an eighth capacitor, a ninth capacitor, a tenth capacitor, a sixth resistor, and a seventh resistor;
one end of the second inductor and one end of the fifth resistor are connected to the first buck output terminal of the main control module, the other end of the fifth resistor is grounded through the sixth capacitor, the other end of the second inductor is connected to the second buck voltage output terminal through the seventh resistor;
one end of the seventh capacitor, one end of the eighth capacitor, one end of the ninth capacitor, and one end of the tenth capacitor are connected to the other end of the second inductor, and the other end of the seventh capacitor, the other end of the eighth capacitor, the other end of the ninth capacitor, and the other end of the tenth capacitor are grounded.

19. The power management chip according to claim 14, wherein the gamma voltage output module comprises one or more filtering capacitors, the number of which is equal to that of the at least one gamma voltage output terminal, wherein each of the one or more filtering capacitors is connected in parallel with a corresponding one of the at least one gamma voltage output terminal.

20. The power management chip according to claim 15, wherein each of the at least one common voltage output module comprises an eighth resistor, a ninth resistor, an eleventh capacitor, a twelfth capacitor, and a thirteenth capacitor;
one end of the eighth resistor is connected to the corresponding common voltage output terminal of the main control module, the other end of the eighth resistor and one end of the ninth resistor are connected to a voltage output terminal;
one end of the eleventh capacitor, one end of the twelfth capacitor, and one end of the thirteenth capacitor are connected to the other end of the eighth resistor, and the other end of the eleventh capacitor, the other end of the twelfth capacitor, and the other end of the thirteenth capacitor are grounded.
